Europäisches Patentamt

European Patent Office

Office européen des brevets

(11) Publication number: **0 269 379**
**A1**

## (12) EUROPEAN PATENT APPLICATION

(21) Application number: 87310263.6

(22) Date of filing: 20.11.87

(51) Int. Cl.4: **G06F 15/62**

(30) Priority: 21.11.86 GB 8627918

(43) Date of publication of application:
**01.06.88 Bulletin 88/22**

(84) Designated Contracting States:
**DE FR GB**

(71) Applicant: ELECTROSONIC LIMITED
**815 Woolwich Road**
**London SE7 8LT(GB)**

(72) Inventor: Smith, Peter Lionel
**14 Oakley Drive Keston**
**Bromley Kent(GB)**

(74) Representative: Colgan, Stephen James et al
**CARPMAELS & RANSFORD 43 Bloomsbury**
**Square**
**London WC1A 2RA.(GB)**

(54) **Processing apparatus for a digitised video image.**

(57) Processing apparatus for a digitised video image is provided, particularly for magnifying of an image in real time by variable magnification factors, for example for use in audio-visual displays and for display on a "video wall".

The apparatus comprises field storage means 10,11 for storing one or more fields of digitised video image, or parts thereof, and line storage means 25,26,27 for storing one or more lines of digitised video image or parts thereof. The line storage means are arranged to accept a line or part thereof from the field storage means and manipulation means are provided, including means for addressing parts of the line storage means to read data stored therein, for reconstruction of a digitised video image from the manipulated data.

FIG.1.

EP 0 269 379 A1

## PROCESSING APPARATUS FOR A DIGITISED VIDEO IMAGE

This invention relates to a processing apparatus for a digitised video image, particularly for magnifying of an image in real time by variable magnification factors, for example for use in audio-visual displays and for display on a "video wall".

A "video wall" is an array of video monitor screens (colour cathode ray tubes) arranged in rows and columns. A typical video wall may have 9, 16 or 25 screens and would be of sufficient size to cover a sizeable wall. Video walls have advantages over other large-screen video monitors, for example of the back-projection type, in that they are relatively slim in profile, do not have a projector which could be affected by dust in the air, and are more visible in higher levels of ambient light. They also have a high angle of view and good resolution.

Video walls are at present used in conjunction with pre-programmed video displays, stored, for example, on laser discs. On account of the large size of the video wall, it lends itself to magnification of the image. Existing arrangements only display the picture in the size that it is presented to the video wall, so that if an image is to be magnified, this must be done prior to assembling the display, i.e. using standard techniques in the recording studio.

Image processors exist which enable portions of an image to be accessed and enlarged. These use very large random access memories (RAMs) to store fields of the image and enable any portion of that image to be accessed. Such arrangements require very large areas of RAM which increases expense. Furthermore, image processors employing large RAMs require parallel video data which is unsuitable for transmitting along cables of significant length. These processors are therefore not very suitable for processing a signal from a central digitiser at a number of remote processing locations.

The present invention provides an extremely flexible image processing apparatus, which is relatively cheap and compact.

According to the present invention, there is provided processing apparatus for a digitised video image, comprising field storage means for storing one or more fields of digitised video image, or parts thereof, and line storage means for storing one or more lines of digitised video image, or parts thereof, whereby the line storage means are arranged to accept a line or part thereof from the field storage means, and manipulation means are provided for manipulation of data from the line storage means and for the reconstruction of a digitised video image from the manipulated data.

Preferably the manipulation means are arranged to repeat individual bits of data from the line storage means and to repeat individual lines of data, or parts thereof, from the line storage means.

In a preferred embodiment of the invention, the field storage means does not allow addressing and retrieval of individual bits of data, but only of whole lines of image. The field storage means are arranged to store and retrieve whole lines of image fields on a first-in, first-out basis. Indirect addressing means may be provided which, when addressed, will in turn address predetermined individual bits of data stored in the line storage means, for formation of the reconstructed digitised video image. Preferably the field storage means comprise first and second field stores arranged whereby, in use, data is written into the first field store while data is read from the second field store, whereupon the operations of the field stores are interchanged, and data is read from the first field store and written to the second field store. The apparatus is preferably arranged to magnify selectable portions of the image by any factor from 2 to 16. A demultiplexer may be arranged to demultiplex bits of luminance and chrominance data as they are read from the field storage means, whereby these separate sets of data may be stored in separate, parallel, line storage means.

By use of both field storage means and line storage means in accordance with the invention, it is not necessary to be able to address every bit in the field storage means, so the field storage means can be of enormously reduced size when compared with the existing apparatus. Instead of RAM memory, which is bulky, very much more compact memory can be used, such a charge-coupled device (CCD) memories. In this way, processing apparatus can be provided which can be controlled by a simple program, such as from a personal computer, as to give pre-programmed video displays which can rapidly switch through different display arrangements, such as different magnification (expansion) factors. Furthermore, because the field stores accept serial data, as opposed to the parallel data required by known RAM - based processors, that data can readily be transmitted along cables to allow a single central digitiser to feed a number of different image processors.

A preferred embodiment of the invention will now be described, by way of example, with reference to the drawings, in which

Figure 1 is a block diagram of the circuit architecture of the preferred embodiment of the invention;

Figure 2 is a schematic diagram of the internal memory architecture of field stores 10 and 11 of Figure 1;

Figure 3 is a schematic diagram of one of field memories 10 or 11 at the end of a particular sequence of write operations;

Figure 4 is a flow diagram representing the control program for the field store write cycle executed by processor 35 of Figure 1 and

Figure 5 is a flow diagram representing the control program for the field store read cycle and RAM write/read cycles executed by processor 35.

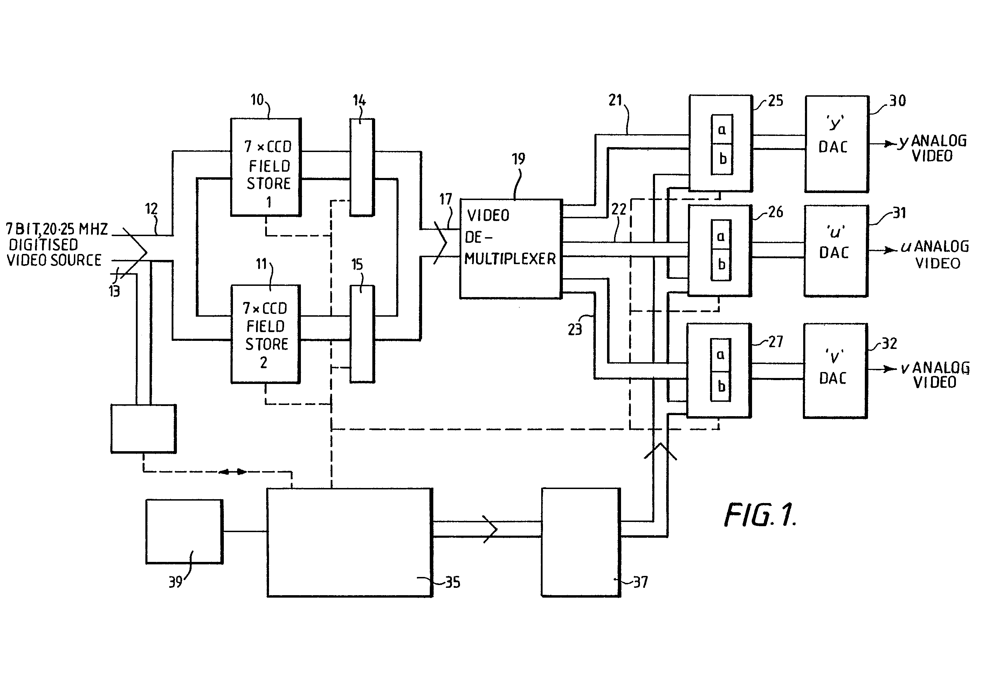

Referring to Figure 1, there are provided two charge-coupled device (CCD) field stores 10 and 11. Each of these comprises seven parallel field stores of the type SAA 9001 made by Mullard and Phillips. They are connected to a common input video data bus 12 for receiving video data from a standard digitised video source (not shown). Standard control signals for the video information (clock, VSO (field sync), VGO (video gating), LSTRN (line sync for resetting hardware logic) and Composite Video Sync) are received on control lines 13 to operate clock circuitry 16 which provides signals (not shown) to the remainder of the circuitry for clocking the video information therethrough. The data outputs of the field stores 10 and 11 are connected to store-select gates 14 and 15 respectively, through which they feed a common data bus 17. Data bus 17 enters a video demultiplexer 19 which in turn feeds luminance (y-luma) data bus 21 and colour-difference-signal (u-chroma and v-chroma) data buses 22 and 23 respectively. Each of these data buses feeds a RAM line store 25, 26 and 27 respectively, each of these line stores comprising two parallel 8×1K RAMs together with appropriate buffers. RAM line store 25 is capable of operating at 45 ns per clock pulse, whereas RAM line stores 26 and 27 need only be capable of operating at 200ns per clock pulse. The RAM line stores output to digital-to-analog converters 30, 31 and 32 to provide y-luma, u-chroma and v-chroma analog video signals for driving one or more video monitors or a video wall (not shown).

Control of the above elements of the apparatus is carried out by a microprocessor 35. The microprocessor is arranged to address the RAM line stores 25, 26 and 27 via a look-up table stored in PROM 37. The microprocessor is provided with commands from an input control device 39 which may be a further pre-programmed personal computer, but for simplicity will be described as three multi-way switches corresponding to 'enlargement factor', 'vertical position' and 'horizontal position'.

The overall operation of the apparatus is as follows. A video source signal is input to bus 12. The signal is a 20.25 MHz digitised video source signal made up of seven parallel streams of u-chroma, v-chroma and y-luma data bits arriving serially in the ratio 1:1:4. A single field is made up of 284 lines of active picture, and two fields, when interleaved, will form a full picture. This data is stored field by field in field stores 10 and 11. Depending on the instructions from processor 35, whole fields may be stored or only certain lines from a field. When only partial fields are stored, two or four consecutive partial fields may be stored in field store 10, followed by the next two or four in field store 11. Store-select gates 14 and 15 are opened alternatively so that only one field store writes to data bus 17 at any given time. When one field store is writing to bus 17, the other reads from bus 12.

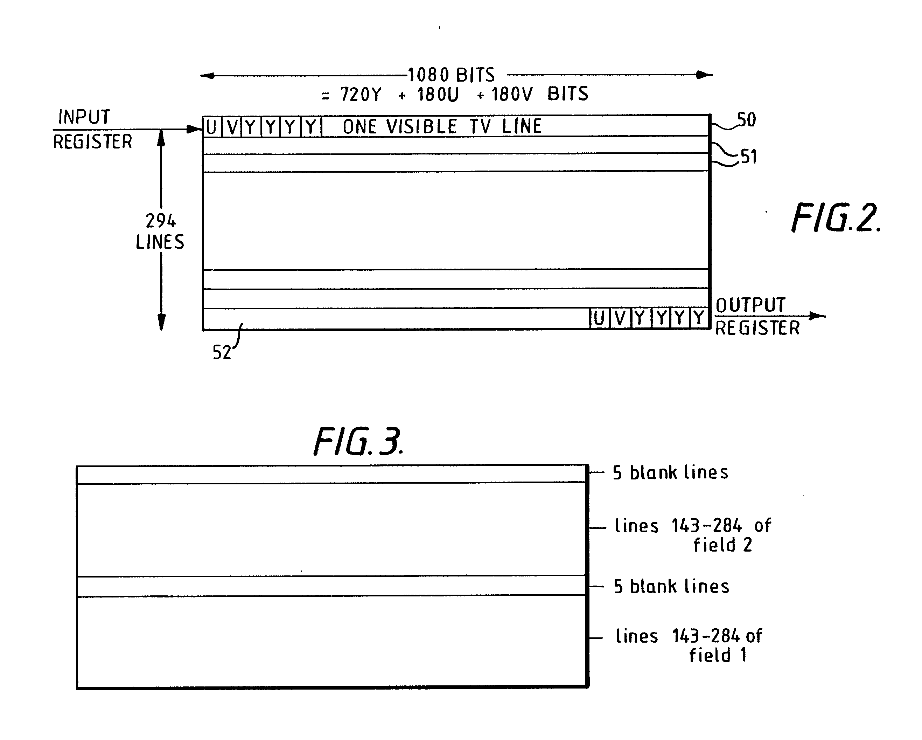

The manner in which field stores 10 and 11 store is shown in Figure 2. Each store is divided into 294 blocks of 1080 bits each. A line of data is input at high speed to an input register 50. From the input register, the entire line is shifted in parallel through the 294 blocks, as the next line is written to the input register, until the shifted line appears at the output register 52, from where it can be output serially at high speed. The shifting operation occurs at a somewhat slower speed, synchronised with the VGO line sync pulse, though "fast-gating" can be used by means of a separate hardware clocking circuit to move a line down through the store at a higher speed without reading additional data in, only lines of 'blank' data.

As the data is read from output register 52, it is demultiplexed by demultiplexer 19 into three sets of data on data buses 21, 22 and 23. These buses are 7 bits in width and for each bit of data on u-chroma and v-chroma buses 26 and 27, there are four bits in succession on y-luma bus 25. The data is read and stored one line at a time in RAM line stores 25, 26 and 27. It has been explained that each of RAM line stores 25, 26 and 27 comprises two 8×1K RAMs a and b, ie. six memory circuits in total. Successive lines of data are stored alternately in memories a and b, with any given seven parallel bits being stored in a single memory address. In the case of y-luma, four addresses are required for each line of data. Thus, of the available 1024 addresses in each RAM, 720 are used in the case of y-luma and 180 in the case of each of u-chroma and v-chroma. In the latter two cases, the memories used are unnecessarily large, but the 1K devices are chosen for convenience.

As an example, consider the operation when it is desired that the bottom right-hand quarter of the incoming picture should be magnified ×2 so as to generate a complete screen. In this case, the upper half of the picture is redundant. The upper half of the picture is generated by the first 142 active picture lines of each field, so the processor 35 causes the writing of the data to the first field store (field store 10, say) to

3

be delayed until line 143 is reached. Lines 143 to 284 are then written into field store 10. For reasons to be explained below, the data is now fast-gated through five blocks 51 (five lines) and then lines 143 to 284 of the next field are stored in the same field store 10. The data is again fast gated through five lines and this brings the first line to the output register 52 (142 + 5 + 142 + 5 = 294 lines). The contents of field store 10 are now as shown in Figure 3.

With two half-fields now stored in field store 10, lines 143 to 284 of the next two fields are written to field store 11 in the same manner. While this is happening, the first two fields are read from output register 52 of field store 10 and transferred to the line stores 25, 26, 27 on a line-by-line basis.

At this point, with one line of data stored in RAM line stores 25, 26 and 27, the microprocessor 35 addresses the look-up table in PROM 37 to indirectly address RAM line stores 25, 26 and 27, or parts thereof, to read the data and output it to digital-to-analog converters, 30, 31, 32. It is at this stage that the horizontal and vertical expansion is carried out. As an example, consider the operation when input control device 39 instructs microprocessor 35 to select the bottom right-hand quarter of a picture and enlarge it $\times 2$ to fill the whole screen. This is achieved by reading each word of 7 bits twice in succession for that half of the line stored in RAM line stores 25-27 which represents the right-hand side of the picture.

Thus, a line of 1080 bits:

1080:1079;...     ...541;540;...     ...;2;1

becomes:

1080;1080;1079;1079;...     ...;541;541

(each bit having 6 other corresponding bits in the same word). Note that the right hand half of a line, as it appears on the picture screen, is represented by the higher order bits 541 to 1080 - ie. the latter half of the line in terms of real time.

The $\times 2$ multiplication process for the line in question is now completed by re-reading the same line of data from the line stores, to give:

1080;1080;1079;1079;...     ...541;541
1080;1080;1079;1079;...     ...541;541

The data representing one sampling point of the original picture has now been multiplied by two in both horizontal and vertical directions and will appear as an enlarged picture when output from digital-to-analog converters 30 to 31. the look-up table in PROM 37 serves to address the portion of the line of data that processor 35 wishes to select for display. To repeat the line, processor 35 merely re-addresses PROM 37 as often as is necessary.

In a similar manner, the bottom left-hand quarter of the picture could be enlarged, merely by addressing bits 1 to 540, repeating each of those bits once and then repeating the row. To do this, processor 35 merely addresses a different table in PROM 37. The same two tables are used for the top left-hand and right-hand quarters of the picture but in the example so far described, these quarters are no longer accessable, since they were not stored in field stores 10 and 11. Thus, PROM 37 contains a look-up table for any horizontal portion of the screen to be magnified. For $\times 16$ magnification; there are 16 portions to choose from.

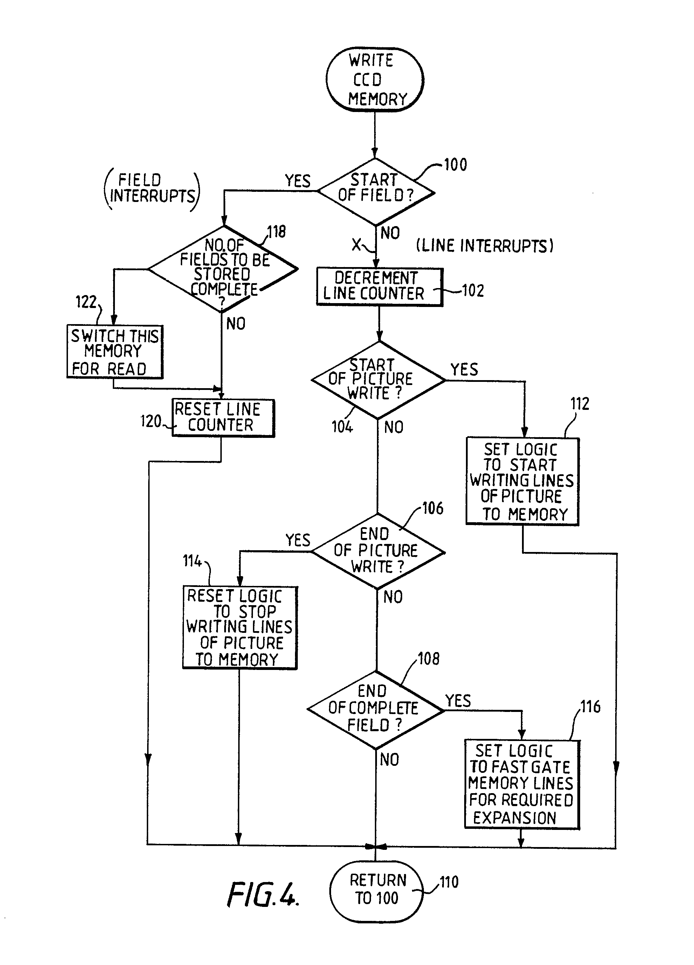

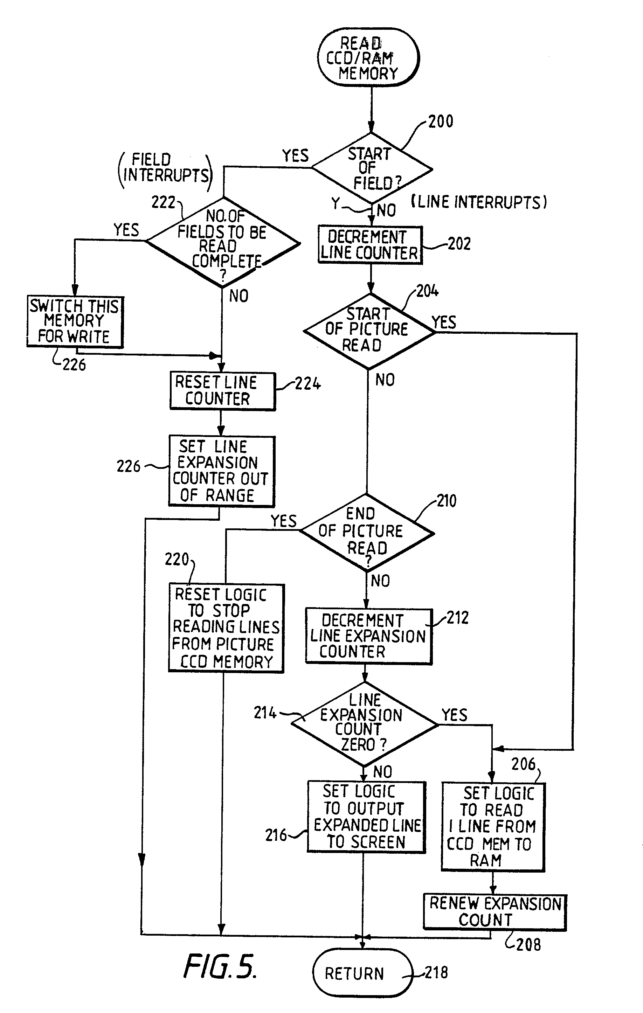

Having described the overall operation of the apparatus, the write and read cycles of field memories 10 and 11 will now be described in greater detail, with reference to Figures 4 and 5. It has been explained that while data is being written to one memory, it is read from the other. This is true for all modes of operation except where the expansion factor is unity. In that case only one field store is used and the data is read out from one end of the field store as it is being written into the other end. This special case will not be described further, but the following description can relate to any expansion factor from $\times 2$ up to the maximum allowed for, in this case $\times 16$. In all such cases, each field store is either in a read mode or a write mode and switches between the two continuously.

The following description with use the example where it is required that the bottom right-hand quarter of the picture is to be expanded by a factor of 2. A field has 284 lines of active picture, so in this case it is lines 143 to 284 that are required. The line counter starts at the total number of lines in a field and is decremented from that number to zero. Therefore, in terms of the contents of the line counter:

Start of picture write = line 143
End of picture write = line 284
Expansion factor = $\times 2$

Referring to Figure 4, the description will start from the point where the field store in question (field store 10, say) has completed a read cycle and a field sync pulse has been received, signifying that the next field has started, ie. the description begins at point X, with the line counter in processor 35 reset at the total number of lines in a field.

The line counter is decremented in step 102, and passes to step 104, which checks the line counter for

4

the start of picture write. There are a number of blank lines before the start of active picture plus 142 lines of active picture before the start of picture write, so the program responds "No" to step 104. Likewise, steps 106 and 108 also inspect the line counter for the end of picture write and the end of the complete field respectively and the program returns at step 110 to step 100 and back to step 102. In this way, the line counter continues to decrement. Each decrement operation of line counter 104 is synchronised with the falling edge of VGO, so that the line counter counts down once for each line of video data arriving on bus 12 (Figure 1).

The line counter continues to decrement until it reaches line 142 at which point step 104 passes to step 112. Step 112 causes a pulse to be sent from the in/out port of microprocessor 35 to a hardware flip-flop which becomes set to activate the SHIFT pin (pin 6) of field store 10. The program continues through the centre loop 110-100-102-104-106-108-110 again, until the line counter reaches 1, at which point the program passes from step 106 to step 114 and the hardware flip-flop is reset to deactivate the field store SHIFT pin. The program again returns to steps 100 and 102 and the line counter is decremented to zero. At this point step 108 detects the end of the complete field and allows step 116 to set further hardware logic to fast-gate the memory through a preset number of lines - in this case five lines, as described earlier with reference to Figure 3.

Step 100 now detects the next field sync pulse and the program passes to step 118. In the present example, there are two partial fields to be stored in field store 10, so the line counter is reset in step 120 and the above described process repeated for a second field (the field count operation is not shown). When lines 143 to 284 (line counter Nos. 142 to 1) of the second field have been stored and fast-gated down through 5 lines, the contents of field store 10 are as shown in Figure 2 and step 118 passes to step 122 so that field store 10 is switched to the read mode. Step 120 is also executed so as to reset the line counter for the next write cycle.

Referring to Figure 5, the microprocessor program controlling reading from CCD field stores 10 and 11 and reading/writing of RAM line stores 25, 26 and 27 is shown.

Continuing from the above description of the write cycle, the read cycle is entered at step 200 and, for simplicity it shall be assumed that the field sync pulse has arrived and the field store 11 has begun its write cycle at point X in its respective flow diagram. Field store 10 is therefore at point Y in Figure 5 and field store 10 is to output fields of video data synchronised with the data entering field store 11:

In this read program, the line counter in effect counts the number of the line being output from RAM line stores 25 to 27.

The line counter starts at maximum and, before active picture is output, a predetermined number of lines of black picture are output. This is achieved by using the look-up table to address blank addresses in RAM line stores 25 to 27. These steps are not shown on the flow chart.

When active picture is due to be read, line counter reaches 284 in step 202, and step 204 recognises that 284 represents the start of active picture and passes to step 206. Appropriate hardware flip-flop logic is set to activate the SHIFT pin of CCD field store 10 and the first line of data is written to RAM line stores 25 to 27. The expansion counter is reset to 2 in step 208 and the program returns to step 202.

The line counter is now decremented to 283, the program passes steps 204 and 210 and decrements the expansion counter to 1 in step 212. Step 214 is passed and step 216 reached. At this point, further hardware logic is set to read a line of data (using the address in the look-up table of PROM 37) and output these to digital-to-analog converters 30 to 32. Once set, the hardware logic is arranged to ensure that the line of data (ie bits 541 to 1080 thereof) is read repeatedly according to the expansion factor, in this case twice. This reading of the line stores is synchronised with the decrementing of the line counter as will be explained below.

The program has now reached point 218 and returns to step 200, 202, 204, 210 and 212. The line expansion counter is now decremented to zero and step 206 is reached, whereupon another line is read from the CCD field store. The expansion counter is reset to 2 again at step 208.

It can be seen that for each decrement of the line counter, one line is output from RAM to the screen at the output and that a line is read from the CCD field store only at alternate decrements of the line counter.

This continues until the line counter reaches 1, whereupon step 210 switches to step 220 and the set-memory-read logic is reset to deactivate the shifting of the CCD field store. A further predetermined number of black lines are output at the end of the field before the next field sync pulse arrives.

At the next field sync pulse, step 200 passes to step 222 and, as there are two fields to be read, (the field count operation is again not shown) the line counter is reset in step 224 and the expansion counter is set out of range. This means that it is set at a very high value so that as steps 202, 204, 210, 212, 214 and 216 are passed prior to the start of active picture (ie. during the output of the initial black lines), step 214 does not detect a zero.

The next field is now ready to start and the above read cycle is repeated.

Finally step 200 registers the start of the next field and step 226 is reached, whereupon field store 10 is again ready for writing. The line counter is reset at step 224 and the line expansion counter again set out of range, ready for the read cycle of field store 11.

From the above explanation, it can be seen why two RAM memories a and b are used for each line store. The timing is in fact such that when one RAM is being read for the final repeated time (in this case the second time), the next line of data from the CCD field stores is being written into the other RAM.

The entire operation of the apparatus for an expansion of the top right-hand quarter of the picture has now been described. A complete video signal has been generated at the output to digital-to-analog converters 30 to 32, and these can be displayed directly on a television monitor or video wall in the normal way.

The operation is similar for different expansion factors, the differences being that control device 39 provides different instructions for: a) expansion factor, b) start and end of picture write (vertical selection of portion of picture for vertical expansion), and c) look-up table selection (horizontal selection of portion of picture for horizontal expansion).

For different expansion factors, Table 1 shows how the CCD field store write cycle is executed.

## TABLE 1

| A | B | C | D | E |
|---|---|---|---|---|
| 1 | 1 | 1 | | |
| 2 | 2 | 2 | 142 | 5 + 5 |
| 3 | 2 | 2 | 95 | 52 + 52 |
| 4 | 2 | 2 | 71 | 76 + 76 |
| 5 | 2 | 4 | 56 | 17 + 17 + 17 + 19 |
| 6 | 2 | 4 | 49 | 24 + 24 + 24 + 26 |

(/Cont'd..)

| 7 | 2 | 4 | 42 | 31 + 31 + 31 + 33 |
| 8 | 2 | 4 | 36 | 37 + 37 + 37 + 39 |
| 9 | 2 | 4 | 32 | 41 + 41 + 41 + 43 |
| 10 | .2 | 4 | 29 | 44 + 44 + 44 + 46 |
| 11 | 2 | 4 | 26 | 47 + 47 + 47 + 49 |
| 12 | 2 | 4 | 24 | 49 + 49 + 49 + 51 |
| 13 | 2 | 4 | 22 | 51 + 51 + 51 + 53 |
| 14 | 2 | 4 | 21 | 52 + 52 + 52 + 54 |
| 15 | 2 | 4 | 19 | 54 + 54 + 54 + 56 |
| 16 | 2 | 4 | 18 | 55 + 55 + 55 + 57 |

A: Expansion factor

B: Number of field stores used

C: Number of fields or partial fields stored in each store

D: Lines stored per field

E: Number of additional fast-gated lines in each field store.

For example, for an expansion factor of 9, four partial fields are stored in each memory, only 32 lines from each field. These lines of active picture are interspersed with 41 lines of blank memory added by fast-gating and finally the data is fast-gated through 43 lines, bringing the total to 284 lines and so bringing the first line to the output register. the 32 lines of active picture can be selected from any one of nine vertical portions of the field of 284 lines. If one considers the 32 lines selected as being the final 32 lines (ie. the lowermost ninth fraction of the picture), then it becomes apparent why it is necessary to add fast-gated lines. This is because those 32 lines must be ready for reading as soon as the write cycle is finished. Normal writing of a line takes 52 microseconds (for a 625 line image), whereas fast gating of a line takes only 17 microseconds. Without fast-gating, there would not be sufficient time, after writing the last line of picture, to bring the data down 43 lines before the start of the next field.

The arrangements illustrated in Table 1 are by no means the only arrangements that could be chosen. In particular, more than four fields could be stored in one field store, but the delay caused would be proportionately greater and synchronisation with the sound could deteriorate.

Though the processing manipulations of the image so far described have been enlargement operations, many other operations could be carried out using this apparatus, including, for example, reductions, inversions etc.

Though the apparatus described uses a CCD field store device of the type which shifts whole lines of data through the store, in the manner of a first-in, first-out shift register, other types of field store could be used. For example a shift register of one bit in width (or seven bits wide), having a minimum length of $284 \times 1080 = 306,720$ bits could be used provided sufficiently accurate clocking/timing means are provided to read and write the data in blocks of 1080 bits. Likewise, 284 parallel registers of 1080 bits length, each individually addressable, could be used, though the subsequent saving in chip area may not be so great. The choice of memory may depend on the type of devices available.

In an alternative embodiment of the invention, a field memory having the ability to store lines of digitised video image and having a line address counter which is resettable to a predetermined line in the memory (line zero) is used instead of the charge-coupled device type memories described above. The line address counter can be incremented and decremented about the zero position. A suitable memory is of the type micro-PD 41221C-70 made by N.E.C., which is a 224,000-bit serial access memory arranged as 320 lines of 700 bits each. In this case, the sampling rate in the digitising of the active picture is adjusted to sample the luminance at a rate of 700 bits per line and the U and V at 175 bits each per line. The U and V are multiplexed together to occupy 350 bits per line and the luminance is stored in one set of 7 memories (each word being 7 bits wide) and the U and V is stored in a second set of 7 memories. Taking into account a second field store, 28 memories of this type are needed in total.

This particular memory also has the ability to increment (and decrement) the current line address in a time of only about 100 nanoseconds. This is particularly advantageous for the following reason.

Between the end of active picture in one line and the start of active picture in the next line, there is a time period of about 12 microseconds. With the use of a memory capable of incrementing (or decrementing) its line address counter more than once within this available time, it is possible to intersperse in memory lines of one field with lines of the next field.

If the lines a first field are designated 1, 2, 3... and the lines of a second field are designated 1',2',3'..., then the lines can be recorded in the order 1,1',2,2',3,3',.... by simply incrementing the line counter twice between write operations, and activating the reset and incrementing the line counter once between those fields.

By doing this, an enlargement of expansion factor 2 is achieved when the data is read out line by line, the resulting picture being a composite picture of two fields which would normally be interlaced. The data is read out a second time to give the complementary field of the frame.

This method of enlargement has an advantage over the previously described method in that jittering of the picture in the vertical direction is substantially eliminated without loss of resolution.

## Claims

1. Processing apparatus for a digitised video image, comprising field storage means, (10,11) for storing one or more fields of digitised video image, or parts thereof, and line storage means (25,26,27) for storing one or more lines of digitised video image or parts thereof, wherein the line storage means are arranged to accept a line or part thereof from the field storage means and manipulation means are provided, including means for addressing parts of the line storage means to read data stored therein, for manipulation of data from the line store means and for reconstruction of a digitised video image from the manipulated data.

2. Apparatus according to claim 1 wherein the manipulation means are arranged to repeat individual bits of data from the line storage means.

3. Apparatus according to claim 1 or 2 wherein the manipulation means are arranged to repeat individual lines of data, or parts thereof, from the line storage means.

4. Apparatus according to any one of claims 1 to 3 wherein the field storage means do not allow addressing and retrieval of individual bits of data, but only of whole lines of image.

5. Apparatus according to any one of claims 1 to 4, wherein the field storage means comprise shift memory arranged to store and retrieve whole lines of image fields on a first-in, first-out basis.

6. Apparatus according to any one of claims 1 to 4, wherein the field storage means are arranged to store and retrieve whole lines of image fields and a line address counter is provided for addressing the position in the field storage means at which storage or retrieval of a line of image field is to take place, said line address counter being resettable to a predetermined position.

7. Apparatus according to any one of the previous claims further comprising indirect addressing means (37) which, when addressed, will in turn address predetermined individual bits of data stored in the line storage means, for formation of the reconstructed digitised video image.

8. Apparatus according to any one of the previous claims wherein the field storage means comprise first (10) and second (11) field stores arranged whereby, in use, data is written into the first field store while data is read from the second field store, whereupon the operations of the field stores are interchanged and data is read from the first field store and written to the second field store.

9. Apparatus according to any one of the previous claims arranged to magnify selectable portions of the image by any factor from 2 to 16.

10. Apparatus according to any one of the previous claims further comprising a demultiplexer (19) arranged to demultiplex bits of luminance and chrominance data as they are read from the field storage means, whereby these separate sets of data may be stored in separate, parallel, line storage means.

FIG.1.

## FIG.2.

INPUT REGISTER

1080 BITS
= 720Y + 180U + 180V BITS

U V Y Y Y Y ONE VISIBLE TV LINE — 50
— 51

294 LINES

U V Y Y Y Y OUTPUT REGISTER

52

## FIG.3.

— 5 blank lines

— lines 143-284 of field 2

— 5 blank lines

— lines 143-284 of field 1

0 269 379

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 502 080 (IBA) <br> * Page 6, lines 3-16; figure 5 * <br> --- | 1,5 | G 06 F 15/62 |
| A | US-A-4 528 585 (T.V. BOLGER) <br> * Column 6, line 67 - column 7, line 30; column 11, lines 39-53; figures 3,9 * <br> --- | 1,2,3,9 | |
| A | GB-A-2 073 536 (BBC) <br> ----- | | |

TECHNICAL FIELDS SEARCHED (Int. Cl.4)

G 06 F  15/62
H 04 N  5/262
H 04 N  1/393
H 04 N  5/44

The present search report has been drawn up for all claims

| Place of search | Date of completion of the search | Examiner |
|---|---|---|
| THE HAGUE | 08-02-1988 | SIX G.E.E. |